# EUROPEAN PATENT APPLICATION

(11) **EP 0 673 741 A1**
(43) Date of publication of application: **27.09.1995**
(21) Application number: 95830062.6
(22) Date of filing: 28.02.1995
(51) Int. Cl.: B29C 45/13

(54) **Improvement in the injection unit in presses for the injection molding of plastic materials**

(30) Priority: 22.03.1994 IT BS940028
(71) Applicant: BMB S.p.A., I-25123 Brescia (IT)
(72) Inventor: Bugatti, Marco, I-25133 Brescia (IT)
(74) Representative: Manzoni, Alessandro

(57) **Abstract**

The present invention pertains to an injection unit in presses for the injection molding of plastic materials, which comprises two injection units (A, B), which join in the same injection position. The two injection units are operated to work alternately in such a manner that a said first injection unit (A) works during one molding cycle of the press and a said second injection unit (B) works during the next molding cycle.

## Description

The present invention pertains, in general, to presses for the injection molding of plastic materials, and more specifically, the invention pertains to the injection unit in such presses.

The presses for the injection molding of plastic materials usually have an injection unit with a section for plasticizing and metering the starting material and a section for injecting the plasticized material into the mold.

The more conventional presses have a single injection unit, whose work cycle is repeated after each injection of material into the mold, that is, after each molding of the pieces provided. Essentially, the work cycle of such a unit first consists of the plasticization and metering of the starting material, then the injection of the plasticized material into the mold. Obviously, a press equipped in this manner must be operated intermittently, with downtimes between one molding cycle and another corresponding more or less to the period of plasticization of the material. The press is thus underutilized with regard to its inherent capacity due to the limitations in the work times imposed by the injection unit.

Presses for injection molding, which have two distinct injection units which work separately from one another and are intended for the injection of perhaps different materials or at different times into the mold, but during the same molding cycle of the machine, therefore still with downtimes between one cycle and another, are also known.

Furthermore, presses having two injection units, which join at only one point or injection channel, are known. Even in this case, the two injection units are provided to work during the same molding cycle of the press, for example, for one unit to inject one type of material and the other unit to inject a different material in succession in order to obtain pieces made of the two combined materials during the same molding.

The primary object of the present invention is to provide a press for the injection molding of plastic materials, particularly, even if not within certain limits, a PET press of the type having two injection units, which join in the same injection position, but which are operated to work alternately: a first injection unit during one molding cycle of the press and a second injection unit during the next molding cycle.

In other words, a first injection unit operates in one molding cycle of the press in order to feed the material to the mold to make one or more first pieces; in the meantime, the other injection unit provides for the plasticization of the starting material that arrives.

Then, after the opening of the mold for the extraction of the molded pieces and the closing of the mold, that is, in a successive work cycle of the press, the other injection unit operates to feed the material to the mold to make one or more second pieces; in this phase, the first injection unit provides for the plasticization of the material to be injected in a subsequent work cycle of the press.

Thus, the advantage of being able to overlap the times for plasticizing the material in one injection unit with the times for injecting the material from the other injection unit is achieved. This results in a cutting down of the downtimes, shorter production cycles and therefore a maximum utilization of the press.

According to the invention, an injection device is provided for the injection molding of plastic materials. The injection device includes a first injection unit with an injector and a second injection unit with an injector and connection means for joining an output line of said first injector with an output line of said second injector to form a unified output line. Alternating connection means is provided for alternatingly connecting the first injector output line to the unified output line and the second injector output line to the unified output line, whereby the first injector works during a first molding cycle and the second injector works during a next molding cycle.

The various features of novelty which characterize the invention are pointed out with particularity in the claims annexed to and forming a part of this disclosure. For a better understanding of the invention, its operating advantages and specific objects attained by its uses, reference is made to the accompanying drawings and descriptive matter in which a preferred embodiment of the invention is illustrated.

### In the drawings:

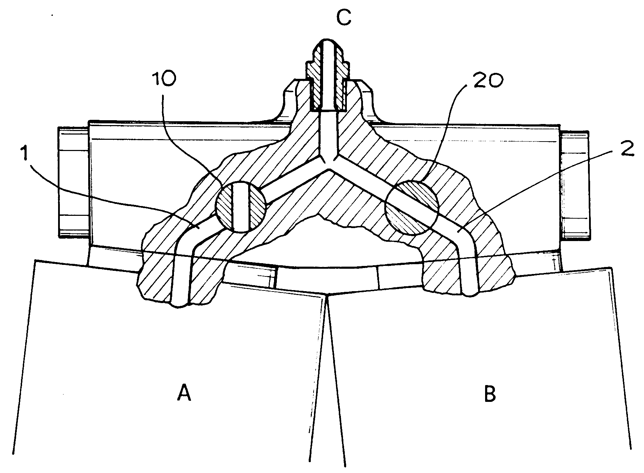

The only Figure illustrates an injection unit for injection presses according to the present invention.

The injection device of the invention comprises a first injection unit A and a second injection unit B. The first injection unit A has a first injector with first injector output and the second injection unit B has a second injector with a second injector output These outputs are joined together in a single injection position C (a unified output) by means of channels 1 and 2, respectively.

The first injection unit A and second injection unit B have designs that are known in themselves, and they usually include a section for the screw plasticization and metering of the material and a section for actually injecting (the injector). Independent hydraulic nozzles 10, 20 can be provided along converging channels 1, 2 into a unified output or system output.

The two units combined in this manner work alternately and are operated independently by a microprocessor, which controls the operating sequence of two units. One unit (A) works during one molding cycle and the other unit (B) works during the next molding cycle of the press. injection unit A or B, which is, from time to time, excluded from the cycle of the machine, carries out the plasticization of the starting material. This makes possible a complete and slow homogenization of the material, with each unit having available a plasticization time of about two molding cycles.

The plasticization and the metering of the material take place independently in each of the two units by means of the rotation of the plasticization screw, which transports the material at the head of the unit into the injection position (C) and is at the same time pressed backwards by the same material.

While a specific embodiment of the invention has been shown and described in detail to illustrate the application of the principles of the invention, it will be understood that the invention may be embodied otherwise without departing from such principles.

## Claims

**1.** An injection device, comprising: a first injection unit with a first unit injector and a second injection unit with a second unit injector and connection means for joining an output line of said first unit injector with an output line of said second unit injector to form a unified output line; and alternating connection means for alternatingly connecting said first unit injector output line to said unified output line while disconnecting said second unit injector from said unified output and connecting said second injector output line to said unified output line while disconnecting said first unit injector from said unified output, whereby said first injector works during a first molding cycle and said second injector works during a next molding cycle.

**2.** An injection device according to claim 1, wherein said first injection unit includes a plasticizer and said second injection unit includes a plasticizer.

**3.** An injection device according to claim 1, wherein said unified output injects material plasticized in said first plasticizer unit while said second plasticizing unit plasticizes and meters a starting material, and vice versa during successive molding cycles such that times for plasticizing material in one unit overlap times for injecting material from another injector.

**4.** An injection device according to claim 1, wherein said first injector carries out a complete filling of a cavity of a mold and a molded piece is removed from said mold, prior to carrying out a successive molding with said second injector.

**4.** Injection unit according to claim 1, further comprising a microprocessor for controlling independent operation of said first injector and said second injector for injecting material into a mold of a press including means for operating said first injector during one mold cycle of the press, operating said second injector during a successive molding cycle wherein an injection unit which does not participate in molding carries out plasticization and metering in preparation for subsequent molding cycles.

**5.** Injection unit according to claim 2, further comprising a microprocessor for controlling independent operation of said first injector and said second injector for injecting material into a mold of the press including means for operating said first injector during one mold cycle of the press, operating said second injector during a successive molding cycle wherein an injection unit which does not participate in molding carries out plasticization and metering in preparation for subsequent molding cycles.

**6.** A process for the injection molding of plastic, comprising providing a first injection unit with a first injector output and a second injection unit with a second injector output; providing joining means for joining the first injector output and the second injector output to provide a unified output; providing valve means for closing a connection between said unified output and said first injection unit and for closing a connection between said unified output and said second injection unit; alternating a connection between said first injector output and said unified output and said second injector output and said unified output by operating said first injection unit during one molding cycle while said first injection unit is connected to said unified output and said second injection unit is disconnected from said unified output and operating said second injection unit during a subsequent molding cycle wherein said first injection unit is disconnected from said unified output and said second injection unit is connected to said unified output.

**7.** A method for injecting according to claim 6, further comprising the steps of plasticizing and metering starting material, in said second injection unit, during injection into a mold by said first injection unit.

**8.** A method for injection according to claim 7, wherein said first injector carries out a complete filling of a cavity of a mold, a molded piece is removed, prior to a successive molding procedure using said second injection unit.
